(19) **Europäisches Patentamt / European Patent Office / Office européen des brevets**

(11) **EP 2 366 124 B1**

(12) **FASCICULE DE BREVET EUROPEEN**

(45) Date de publication et mention
de la délivrance du brevet:
**19.08.2015 Bulletin 2015/34**

(21) Numéro de dépôt: **09803860.7**

(22) Date de dépôt: **14.12.2009**

(51) Int Cl.:
***G02C 7/02*** *(2006.01)*   ***G02B 1/06*** *(2006.01)*
***G02B 3/12*** *(2006.01)*   ***G02B 3/14*** *(2006.01)*

(86) Numéro de dépôt international:
**PCT/FR2009/052523**

(87) Numéro de publication internationale:
**WO 2010/076473 (08.07.2010 Gazette 2010/27)**

(54) **ELEMENT OPTIQUE TRANSPARENT COMPRENANT UN ENSEMBLE DE CELLULES.**

TRANSPARENTES OPTISCHES ELEMENT MIT EINER ZELLANORDNUNG

TRANSPARENT OPTICAL ELEMENT INCLUDING A CELL ASSEMBLY

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **15.12.2008 FR 0858559**

(43) Date de publication de la demande:
**21.09.2011 Bulletin 2011/38**

(73) Titulaire: **Essilor International
(Compagnie Générale d'Optique)
94220 Charenton-le-Pont (FR)**

(72) Inventeur: **BERTHELOT, Laurent
F-94220 Charenton-le-Pont (FR)**

(74) Mandataire: **Cabinet Plasseraud
52, rue de la Victoire
75440 Paris Cedex 09 (FR)**

(56) Documents cités:
**EP-A- 1 990 671        WO-A-03/034748
WO-A-2005/006029    WO-A-2008/099117
WO-A1-2006/013250   US-A1- 2002 030 780
US-A1- 2006 245 072**

**Description**

La présente invention concerne un élément optique transparent qui comprend un ensemble de cellules. Elle est destinée en particulier à des applications ophtalmiques, notamment pour réaliser des verres de lunettes.

Dans le cadre de la présente description, on entend par transparence la possibilité de voir distinctement un objet ou une scène quelconque à travers l'élément optique, et notamment à travers l'ensemble de cellules. Autrement dit, la lumière qui traverse l'ensemble de cellules n'est pas affectée d'une manière qui pourrait brouiller la vision. En particulier, elle n'est pas diffusée ni diffractée, si bien qu'une source lumineuse ponctuelle qui est située à distance de l'élément optique est perçue comme un point à travers l'ensemble de cellules.

Il est connu de réaliser un élément optique en introduisant des portions de substances à propriétés optiques dans des cellules de cet élément, puis en fermant les cellules. Les portions des substances qui sont contenues dans les cellules sont ainsi définitivement isolées les unes des autres, et ne peuvent pas se mélanger ni diffuser entre des cellules voisines. La ou les propriété(s) qui est (sont) conférée(s) à l'élément optique par les substances enfermées dans les cellules sont alors permanentes pendant toute la durée d'utilisation de l'élément optique.

Le document WO 2008/099117 fait varier la hauteur de cable permettant de fermer les cellules.

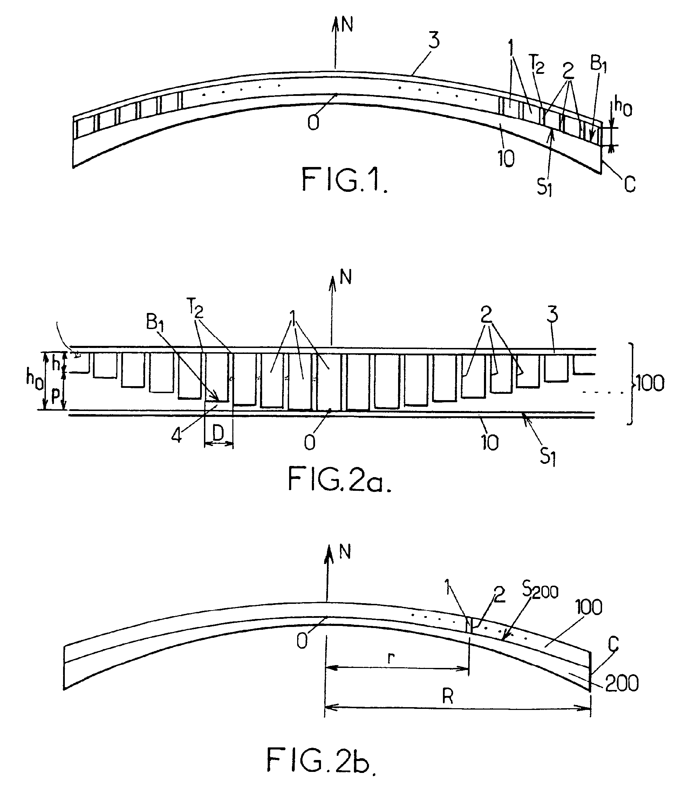

Pour cela, un tel élément optique transparent comprend, conformément à la figure 1 :

- un substrat 10 avec une face de référence $S_1$ ;

- un réseau de parois 2, qui est porté par la face $S_1$ et qui forme un ensemble de cellules 1 séparées et juxtaposées parallèlement à cette face, les parois 2 ayant des sommets $T_2$ respectifs qui sont situés à une hauteur $h_0$ constante et mesurée à partir de la face de référence $S_1$, et

- un film 3 de fermeture des cellules 1, qui est disposé sur les sommets $T_2$ des parois 2, parallèlement à la face de référence $S_1$.

Chaque cellule 1 est ainsi limitée latéralement par des faces de parois 2, et est limitée entre le film de fermeture 3 et un fond de cellule $B_1$ selon une direction N qui est perpendiculaire à la face $S_1$. Dans les éléments optiques à cellules disponibles avant la présente invention, le fond $B_1$ de chaque cellule 1 est confondu avec la face de référence $S_1$ du substrat 10. La hauteur $h_0$ des parois 2 est alors égale à une profondeur interne des cellules, qui est mesurée entre les sommets $T_2$ et le fond $B_1$, selon la direction N. Cette profondeur est identique pour toutes les cellules 1 de l'élément optique.

Chaque cellule 1 contient en outre un milieu transparent.

En particulier, les parois 2 peuvent être constituées d'une résine lithographique. Le réseau de ces parois peut alors être formé en irradiant sélectivement une couche de la résine à travers un masque, puis en la développant. Les dimensions des parois 2 sont choisies pour supprimer ou réduire une éventuelle diffusion lumineuse que pourrait produire chaque paroi individuellement. Simultanément, le motif du réseau des parois 2 est sélectionné pour supprimer des interférences constructives qui pourraient résulter de telles diffusions individuelles dans certaines directions. De cette façon, le réseau des parois 2 ne réduit pas la transparence de l'élément optique au sens qui a été défini plus haut.

La portion de substance à propriété optique qui est introduite dans chaque cellule 1 constitue le milieu transparent contenu dans celle-ci.

Pour certaines applications, un effet optique est recherché pour l'élément, qui est une puissance dioptrique analogue à celle d'une lentille optique. Pour cela, les milieux transparents qui sont contenus dans les cellules 1 ont des valeurs respectives variables d'un indice de réfraction lumineuse, de sorte que des gradients d'indice macroscopiques sont formés sur la face $S_1$ de l'élément optique. Ces gradients d'indice sont sélectionnés de façon connue pour produire la puissance optique recherchée. Cette puissance optique P est donnée par la relation suivante :

$$P = -2 \cdot h_0 \cdot \Delta n / R^2 , \qquad\qquad (1)$$

où R est le rayon d'un bord circulaire C du substrat 10 et $\Delta n$ est la différence d'indice de réfraction lumineuse du milieu qui est contenu dans les cellules 1, entre le centre O et le bord C de l'élément. Autrement dit : $\Delta n = n(R) - n(O)$. Selon le signe de $\Delta n$, la lentille qui est équivalente à l'élément optique est convergente (valeur de n la plus élevée au centre O) ou divergente (valeur de n la plus élevée à proximité du bord C). La puissance optique ainsi réalisable pour l'élément optique est donc limitée par l'amplitude des variations de l'indice de réfraction lumineuse pour les milieux transparents qui sont contenus dans les cellules 1. Or les matériaux susceptibles d'être utilisés pour constituer ces milieux transparents peuvent avoir des valeurs d'indice de réfraction qui varient dans une mesure insuffisante pour obtenir une puissance optique recherchée, notamment lorsque cette puissance optique est élevée.

Pour palier cette limitation due aux matériaux transparents qui sont disponibles, il est connu de former des discontinuités de l'indice de réfraction entre des cellules voisines. Ces discontinuités produisent des sauts de longueur de chemin optique qui sont des multiples d'une longueur d'onde lumineuse. La puissance optique de l'élément peut ainsi être augmentée pour cette longueur d'onde, par effet de repliement de phase de la même manière que pour une lentille de Fresnel. Mais l'élément optique présente alors un chromatisme important, du fait que les sauts de longueur de chemin optique ne sont adaptés que pour une seule longueur d'onde à l'intérieur de l'intervalle de lumière visible.

Par ailleurs, une méthode efficace et économique pour introduire les portions de substances à propriété optique dans les cellules 1, avec des compositions variables entre des cellules différentes, consiste à injecter ces portions dans les cellules en utilisant une tête d'injection de matière du type tête à jet d'encre. Par exemple, la tête d'injection est alimentée à partir de deux réservoirs qui contiennent séparément deux composantes de milieu transparent, et elle est conçue pour produire des gouttes d'un volume fixé à partir de l'un ou l'autre des réservoirs. Le remplissage de chaque cellule 1 correspond à un nombre maximal de gouttes qui est identique pour toutes les cellules, de sorte que chaque cellule remplie contient un nombre entier de gouttes de l'une des composantes, complété jusqu'au nombre maximal par des gouttes de l'autre composante. Les milieux transparents qui sont contenus dans les cellules 1 sont ainsi des mélanges des deux composantes, avec des proportions qui sont restreintes à des valeurs multiples de l'inverse du nombre maximal de gouttes dans chaque cellule. Pour cette raison, la propriété optique des milieux transparents qui sont contenus dans les cellules varie selon un incrément fixe, et ne peut prendre qu'un nombre limité de valeurs. Lorsque cette propriété optique est l'indice de réfraction lumineuse, de telles variations incrémentales ont un effet identique à celui de marches d'épaisseur pour la lentille équivalente si cette dernière est constituée d'un matériau homogène. Selon une autre interprétation, ces variations incrémentales contribue à une rugosité de la lentille équivalente. Elles provoquent donc une diffusion lumineuse qui réduit la transparence de l'élément optique.

Compte tenu de ces limitations et inconvénients des éléments optiques à cellules déjà connus, un premier but de l'invention consiste à proposer un tel élément avec des variations apparentes de l'indice de réfraction lumineuse, qui sont accrues entre certaines des cellules distantes les unes des autres.

Un deuxième but de l'invention consiste à proposer un élément transparent à cellules du type précédent, qui présente un chromatisme réduit.

Un troisième but de l'invention consiste à proposer un élément transparent à cellules, dont les variations d'indice de réfraction entre des cellules différentes peuvent être inférieures aux variations d'éléments connus de l'art antérieur, lorsque les contenus des cellules sont obtenus d'une même façon. Ce troisième but de l'invention peut concerner, notamment, des éléments optiques dont les cellules sont remplies de mélanges en utilisant une tête d'injection de matière du type tête à jet d'encre.

Enfin, un quatrième but de l'invention consiste à proposer un élément optique transparent à cellules, qui produit une diffusion lumineuse réduite.

Pour cela, l'invention propose un élément optique transparent à cellules, tel que décrit précédemment. et tel que défini dans la revendication 1.

L'élément optique de l'invention est transparent au sens qui a déjà été expliqué. Par conséquent, un observateur peut voir clairement, lorsqu'il est situé d'un côté de et à distance de l'élément, une scène qui est située de l'autre côté de cet élément, avec aussi une distance de séparation entre la scène et l'élément optique.

Certaines cellules d'un élément optique selon l'invention sont donc différenciées par des variations de profondeur. Ces variations de profondeur produisent des variations de longueur du chemin optique, pour des rayons lumineux qui traversent l'élément dans des cellules différentes. Ainsi, une distribution de profondeur des cellules est créée à la surface de l'élément optique, qui peut conférer un effet dioptrique macroscopique à l'élément optique.

Les variations de profondeur des cellules qui sont introduites par l'invention sont équivalentes, théoriquement, à des variations de l'indice de réfraction d'un milieu cellulaire fictif qui serait contenu dans des cellules de profondeur constante. De telles variations fictives d'indice peuvent alors être supérieures aux variations d'indice qui seraient produites seulement par des matériaux transparents différents contenus dans les cellules.

Etant donné que les variations de profondeur des cellules concernent la réfraction des rayons lumineux au fond de chaque cellule, le chromatisme qui en résulte est faible. En particulier, il est très inférieur à un chromatisme qui résulterait de repliements de phase.

En outre, les profondeurs des cellules, qui sont variables selon l'invention, peuvent facilement être contrôlées avec précision. En particulier, elles peuvent être contrôlées numériquement. Pour cette raison notamment, un tel élément optique peut être produit en grande série, avec un degré de reproductibilité qui est élevé.

Notamment, les variations de profondeur des cellules peuvent facilement être faibles, produisant de petites variations de longueur de chemin optique pour des rayons lumineux qui traversent l'élément dans des cellules différentes. En particulier, ces variations de longueur de chemin optique peuvent être inférieures à celles qui résulteraient de mélanges produits par une tête d'injection de matière du type tête à jet d'encre.

Selon un premier mode de réalisation de l'invention, plusieurs cellules qui ont des profondeurs respectives différentes peuvent contenir chacune un milieu identique. Le remplissage des cellules est alors particulièrement simple. En particulier, ce peut être un remplissage collectif, par lequel toutes les cellules sont remplies simultanément avec une substance commune de composition unique.

Selon un second mode de réalisation de l'invention, les milieux qui sont contenus dans plusieurs cellules ayant des profondeurs différentes, peuvent comprendre respectivement des mélanges d'au moins deux composantes de remplissage des cellules, avec des proportions variables entre certaines au moins de ces cellules. Dans ce cas, les variations de profondeur des cellules sont combinées avec les variations du milieu qui est contenu dans chaque cellule. Notamment, les composantes de remplissage des cellules peuvent avoir des valeurs différentes de l'indice de réfraction lumineuse. La combinaison des variations de profondeur et des variations des milieux contenus dans les cellules permet alors d'obtenir des variations de longueur de chemin optique qui sont inférieures à celles qui résulteraient seulement des variations des milieux contenus dans les cellules. La rugosité de la lentille homogène qui est équivalente à l'élément optique peut ainsi être réduite. La transparence de l'élément optique est donc augmentée.

L'invention propose aussi un composant optique transparent, qui comprend un composant optique de base et un élément optique transparent tel que décrit précédemment. L'élément optique transparent est alors fixé sur une face du composant de base. Pour cela, l'élément optique peut être une structure multicouche mince à faces parallèles, dont l'une des couches élémentaires incorpore l'ensemble de cellules.

D'autres particularités et avantages de la présente invention apparaîtront dans la description ci-après d'exemples de réalisation non limitatifs, en référence aux dessins annexés, dans lesquels :

- la figure 1, déjà décrite, est une vue en coupe d'un élément optique à cellules tel que connu avant la présente invention ;

- les figures 2a et 2b sont des vues en coupe respectives d'un élément et d'un composant optiques à cellules conformes à la présente invention ; et

- la figure 3 est un diagramme de comparaison de deux éléments optiques, obtenus respectivement sans utiliser et en utilisant l'invention.

Pour raison de clarté, les dimensions des éléments qui sont représentés sur les figures 1, 2a et 2b ne sont pas en proportion avec des dimensions réelles, ni avec des rapports de dimensions réels. En outre, des références identiques qui sont indiquées sur des figures différentes désignent des éléments identiques, ou qui ont des fonctions identiques. Par ailleurs, N désigne une direction perpendiculaire à la surface du substrat, sur lequel la présente invention est mise en oeuvre.

A titre d'illustration, la description qui suit concerne une application de l'invention au domaine ophtalmique. Plus particulièrement, le composant optique qui est obtenu est un verre de lunettes ophtalmiques, adapté pour produire une correction visuelle pour un porteur de ce verre.

Conformément à la figure 2a, un élément optique 100 en forme de structure multicouche comprend un film de base 10 formant substrat, un ensemble de cellules 1 et un film de fermeture 3. Les cellules 1 peuvent être formées dans une couche intermédiaire de résine lithographique d'épaisseur $h_0$, mesurée selon la direction N. $S_1$ est la face du film 10 qui porte la couche de résine.

Les cellules 1 peuvent être formées par lithographie, de sorte que les parois 2 correspondent à des portions de résine qui sont réticulées et qui restent définitivement entre des portions de résine qui ont été dissoutes pour former les cellules. En outre, le masque lithographique qui est utilisé pour définir les parois 2 peut être absorbant dans les zones correspondant aux cellules 1, avec des niveaux d'absorption variables dans ces zones. Ainsi, une portion de résine lithographique qui est située initialement à l'emplacement d'une cellule 1 est plus irradiée si le masque est moins absorbant à cet endroit. Elle est alors dissoute plus lentement lors du développement de la résine, de sorte qu'une portion résiduelle 4 de résine subsiste après développement au fond de la cellule formée. Cette cellule a alors une profondeur qui est réduite de l'épaisseur de la portion résiduelle 4. Eventuellement, la résine peut être exposée une nouvelle fois au rayonnement d'irradiation, pour réticuler et fixer ainsi définitivement la portion 4. De façon générale, chaque portion résiduelle 4 est solide, c'est-dire qu'elle ne peut pas se déformer, ni fluer, ni couler, ni se mélanger avec le contenu de la cellule 1 correspondante. De plus, les portions résiduelles 4 sont avantageusement inertes et imperméables par rapport aux milieux transparents qui sont contenus dans les cellules 1. De cette façon, l'élément 100 est pourvu de l'ensemble des cellules 1, avec des profondeurs individuelles de cellules qui peuvent varier. Ces profondeurs individuelles des cellules 1 sont notées h, de façon générique. L'épaisseur de la portion de résine 4 qui reste sous chaque cellule 1 est notée p, de sorte que $h + p = h_0$, quelque soit la cellule 1 considérée. Pour cette raison, chaque portion 4 est appelée portion complémentaire de la cellule 1 correspondante, et la face $S_1$ est appelée face de référence.

Pour le mode de formation des cellules 1 qui vient d'être décrit, les parois 2 et les portions 4 sont toutes constituées de résine lithographique. Eventuellement, un ou plusieurs revêtements peuvent être appliqués sur les parois 2, de sorte que ces parois sont constituées partiellement d'un matériau identique à celui des portions 4.

Pour d'autres modes de formation des cellules 1 à profondeurs variables, seules les portions complémentaires 4 peuvent être en résine lithographique. Les parois 2 peuvent alors être en silice ($SiO_2$) ou en alumine ($Al_2O_3$), par exemple. Enfin, les parois 2 et les portions 4 peuvent être constituées au moins en partie d'un même matériau, autre qu'une résine lithographique. De façon générale, l'ensemble des cellules 1 peut être produit par l'une des techniques suivantes : photolithographie, stéréolithographie, estampage («embossing» en anglais), gravure par laser, etc.

Dans tous les cas, le matériau des portions complémentaires 4 est transparent.

Les centres respectifs de cellules 1 qui sont voisines peuvent être séparés, parallèlement à la face $S_1$, d'une distance D qui est comprise entre 10 $\mu$m et 200 $\mu$m (micromètre), de préférence entre 40 $\mu$m et 75 $\mu$m. De cette façon, les cellules 1 sont à la fois suffisamment petites pour ne pas être visibles individuellement, et suffisamment grandes pour ne pas provoquer de diffusion lumineuse. L'élément optique 100 est alors esthétique et transparent. La distance D est aussi la dimension des cellules 1 parallèlement à la face $S_1$ du film 10.

Le film 3 peut être appliqué sur les sommets $T_2$ des parois 2 directement, ou avec une couche intermédiaire d'un gel ou d'un matériau adhésif, qui n'est pas représentée. Dans tous les cas, l'épaisseur $h_0$ est la hauteur des parois 2, mesurée à partir de la face $S_1$ du film 10 servant de référence. La profondeur h de chaque cellule 1 est mesurée à partir des sommets $T_2$ des parois 2, jusqu'au fond $B_1$ de cette cellule qui correspond à la surface supérieure de la portion complémentaire 4 sous-jacente.

Conformément à la figure 2b, l'élément optique transparent 100 qui vient d'être décrit peut être appliqué sur une face $S_{200}$ d'un composant optique de base 200. De cette façon, un nouveau composant optique est obtenu, qui comprend le composant de base 200 et l'élément 100. Le composant de base 200 peut être lui-même une lentille, notamment un verre ophtalmique. Dans ce cas, les effets dioptriques respectifs de l'élément 100 et du verre de base 200 se combinent pour produire un effet dioptrique total pour le nouveau composant optique. Ainsi, l'élément 100 produit la puissance optique P qui est donnée par la relation (1), en supplément de la puissance optique du verre de base 200. Sur la figure 2b, R désigne le diamètre de la face $S_{200}$, qui est limitée par le bord C. Ce diamètre peut être égal à 60 mm (millimètre), par exemple, lorsque le verre de base 200 n'a pas encore été détouré aux dimensions d'un logement de monture de lunettes.

Pour produire une puissance optique P suffisante, la profondeur h des cellules 1 peut varier entre 5 $\mu$m et 30 $\mu$m, de préférence entre 15 $\mu$m et 25 $\mu$m.

Dans le premier mode de réalisation qui est maintenant décrit, toutes les cellules 1 contiennent le même milieu transparent. Ce milieu peut être, par exemple, de l'air, un gaz inerte, ou un vide. Par gaz inerte, on entend un gaz quelconque qui ne réagit chimiquement avec aucun des matériaux de l'élément 100, de sorte qu'il n'est pas altéré pendant la durée de vie de l'élément 100. Par vide, on entend un milieu qui possède une pression réduite à l'intérieur des cellules 1, par rapport à la pression qui existe à l'extérieur de l'élément optique 100. Un avantage des milieux gazeux réside dans leur valeur d'indice de réfraction lumineuse, proche de 1,0, qui présente un écart important avec la valeur d'indice du matériau des portions complémentaires 4. En effet, ce dernier matériau étant solide, sa valeur d'indice de réfraction lumineuse est en général supérieure à 1,6.

Plus généralement, la longueur L du chemin optique parallèle à la direction N, entre la face de référence $S_1$ et les sommets $T_2$ des parois 2, est :

$$L = p \cdot n_4 + h \cdot n_1 = [n_4 + (n_1 - n_4) \cdot h/h_0] \cdot h_0$$

où $n_1$ et $n_4$ sont les valeurs d'indice de réfraction lumineuse respectivement pour le milieu transparent qui est contenu dans l'une des cellules 1 et pour le matériau transparent des portions 4. La longueur L varie en fonction de la cellule 1 qui est traversée par le rayon lumineux. Autrement dit, l'indice de réfraction $n_{eq}$ d'un matériau homogène qui serait contenu dans une cellule d'un élément optique conforme à la figure 1, à profondeur de cellules constante et égale à $h_0$, et qui provoquerait une même longueur de chemin optique, est :

$$n_{eq} = n_4 + (n_1 - n_4) \cdot h/h_0 \qquad (2)$$

Celui-ci est appelé indice de réfraction équivalent, ou indice apparent, pour la cellule 1 considérée.

Dans un second mode de réalisation de l'invention, on suppose que les cellules sont remplies chacune d'un mélange de deux composantes A et B, ayant respectivement des valeurs différentes $n_A$ et $n_B$ pour l'indice de réfraction lumineuse. Dans ce cas, l'indice du milieu transparent qui est contenu dans une cellule 1 est :

$$n_1 = n_A \cdot x_A + n_B \cdot (1-x_A) = n_B + \Delta n_{AB} \cdot x_A$$

où $x_A$ et $\Delta n_{AB}$ désignent respectivement la proportion de la composante A dans le mélange qui est contenu dans la cellule 1 considérée, et l'écart entre les indices des deux composantes A et B du mélange ($\Delta n_{AB} = n_A - n_B$). L'indice apparent donné par la relation (2) est alors pour cette cellule :

$$n_{eq} = n_4 + \Delta n_{B4} \cdot h/h_0 + \Delta n_{AB} \cdot x_A \cdot h/h_0 \qquad (3)$$

où $\Delta n_{B4} = n_B - n_4$. L'écart entre les indices apparents de deux cellules distinctes 1 et 1', chacun donné par la relation (3), est alors :

$$\Delta n_{eq} = \Delta n_{B4} \cdot \Delta h/h_0 + \Delta n_{AB} \cdot (x_A \cdot h - x_A' \cdot h')/h_0$$

$$= [\Delta n_{B4} + \Delta n_{AB} \cdot x_A] \cdot \Delta h/h_0 + \Delta n_{AB} \cdot (h'/h_0) \cdot \Delta x_A \qquad (4)$$

où h' est la profondeur de la cellule 1', $\Delta h$ est la variation de profondeur entre les cellules 1 et 1' ($\Delta h = h - h'$), et $\Delta x_A$ est la variation-de la proportion de la composante A entre les cellules 1 et 1 ' ($\Delta x_A = x_A - x_A'$, $x_A'$ étant la proportion de la composante A pour la cellule 1').

Si toutes les cellules ont la même profondeur h, alors le premier terme de $\Delta n_{eq}$ dans la relation (4), qui est proportionnel à la variation de profondeur $\Delta h$, est nul. Il ne reste alors que $\Delta n_{eq} = \Delta n_{AB} \cdot (h/h_0) \cdot \Delta x_A$ qui est maximal lorsque $\Delta x_A = 1$ et $h = h_0$ : $\Delta n_{eq\ MAX} = \Delta n_{AB}$.

L'introduction, selon la présente invention, d'une variation de profondeur des cellules ajoute le premier terme de la relation (4) dans les variations d'indice apparent des cellules. Si $n_4$ est plus grand que $n_A$, lui-même plus grand que $n_B$, la variation maximale de $n_{eq}$ est obtenue pour h=0, h'=$h_0$ et $x_A'$=0. Elle est $\Delta n_{eq\ MAX} = \Delta n_{B4}$, qui est supérieur à $\Delta n_{AB}$, en valeur absolue.

L'invention permet donc d'augmenter la puissance optique absolue de l'élément 100 qui est réalisable, conformément à la relation (1).

Pour cela, et d'une façon qui est identique par rapport aux éléments optiques connus avant la présente invention, la variation d'indice apparent pour chaque cellule, $\Delta n_{eq}$, par rapport à la valeur au centre O de l'élément optique 100, est de préférence conforme à la relation suivante :

$$\Delta n_{eq}(r) - \Delta n_{eq}(O) = [\Delta n_{eq}(R) - \Delta n_{eq}(O)] \cdot (r/R)^2 , \qquad (5)$$

où r est la distance radiale de la cellule 1 mesurée par rapport au centre O (figure 2b).

En outre, lorsque la profondeur des cellules et les proportions des mélanges varient de façon incrémentale, la variation de la profondeur des cellules ajoute, par la relation (4), des valeurs supplémentaires pour $\Delta n_{eq}$ qui sont intermédiaires entre 0 et $\Delta n_{eq\ MAX}$. Les valeurs réalisables de l'écart d'indice apparent $\Delta n_{eq}$ sont alors plus nombreuses, par rapport à un élément optique à profondeur de cellules constante, qui serait basé sur les mêmes composantes de mélanges A et B et sur le même incrément des proportions de mélanges. Les différences des valeurs de $\Delta n_{eq}$ par rapport aux valeurs calculées par la formule (5) peuvent donc être réduites. L'invention permet par conséquent de réduire aussi les sauts de longueur de chemin optique qui sont présents entre des cellules voisines. La lentille de matériau homogène qui est équivalente à l'élément optique 100 présente alors une rugosité qui est réduite. Pour cette raison, l'élément optique 100 à profondeur des cellules variable est plus transparent.

Les inventeurs ont déterminé que la rugosité quadratique de la lentille équivalente homogène résulte d'une combinaison de deux contributions pour chaque cellule.

La première contribution à cette rugosité quadratique pour chaque cellule 1 provient de l'utilisation de cellules dans chacune desquelles l'indice apparent $n_{eq}$ est uniforme. Autrement dit, la première contribution provient du découpage de la face $S_1$ en cellules discrètes, couramment appelé pixellisation. Elle est proportionnelle au carré de la dimension D des cellules 1 parallèlement à la face $S_1$ du substrat 10. En outre, cette première contribution est plus élevée à proximité du bord C de l'élément 100, pour une dimension D des cellules qui est constante. En effet, d'après la relation (5), la variation de $\Delta n_{eq}$ est plus importante près du bord C, de sorte que la dimension constante D engendre des sauts de longueur de chemin optique qui augmentent avec la distance radiale r. En réalité, l'invention ne modifie pas cette première contribution à la rugosité quadratique de la lentille équivalente, par rapport aux éléments optiques connus de l'art antérieur.

La seconde contribution pour chaque cellule 1 provient de la différence pour cette cellule, entre la valeur réelle de $\Delta n_{eq}$ et la valeur théorique qui est calculée par la formule (5) pour le centre de cette cellule, en fonction de la distance radiale r qui sépare ce centre de cellule du centre O de l'élément optique 100. En effet, la valeur réelle dépend de la technique qui est utilisée pour former les mélanges des deux composantes A et B qui sont introduits dans les cellules. Lorsqu'une tête d'injection de matière est utilisée, comme décrit antérieurement, avec un volume fixé de chaque goutte de l'une ou l'autre des composantes de mélange A et B qui est introduite dans les cellules, cette seconde contribution varie principalement en proportion du carré de ce volume de goutte. En effet, ce volume de goutte limite les proportions de mélange qui sont réalisables à des valeurs discrètes, et par conséquent limite aussi les valeurs réelles de l'écart d'indice apparent $\Delta n_{eq}$. Comme cela a déjà été expliqué, l'invention permet de réduire cette seconde contribution de la rugosité quadratique de la lentille qui est équivalente à l'élément optique 100.

Mais cette seconde contribution dépend à la fois du volume de goutte et du volume individuel des cellules 1. En effet, le nombre de valeurs discrètes qui sont réalisables pour les proportions de mélange est plus petit lorsque les cellules sont elles-mêmes plus petites. Ainsi, la seconde contribution à la rugosité quadratique est simultanément inversement proportionnelle au carré de la dimension D des cellules.

La rugosité quadratique moyenne $\rho_{moy}$ de la lentille est obtenue en calculant une valeur quadratique moyenne des contributions de toutes les cellules. A cause de la première contribution cellulaire présentée précédemment, et pour un diamètre R de la lentille qui est fixé, la rugosité quadratique moyenne $\rho_{moy}$ varie proportionnellement à la dimension cellulaire D, lorsque cette dimension est suffisamment grande, typiquement supérieure à 80 $\mu$m. Elle devient aussi infinie lorsque la dimension cellulaire D tend vers zéro, à cause de la seconde contribution cellulaire aussi expliquée précédemment. Par suite de ces variations extrêmes, la rugosité quadratique moyenne $\rho_{moy}$ de la lentille présente une valeur minimale par rapport à des variations de la dimension D des cellules.

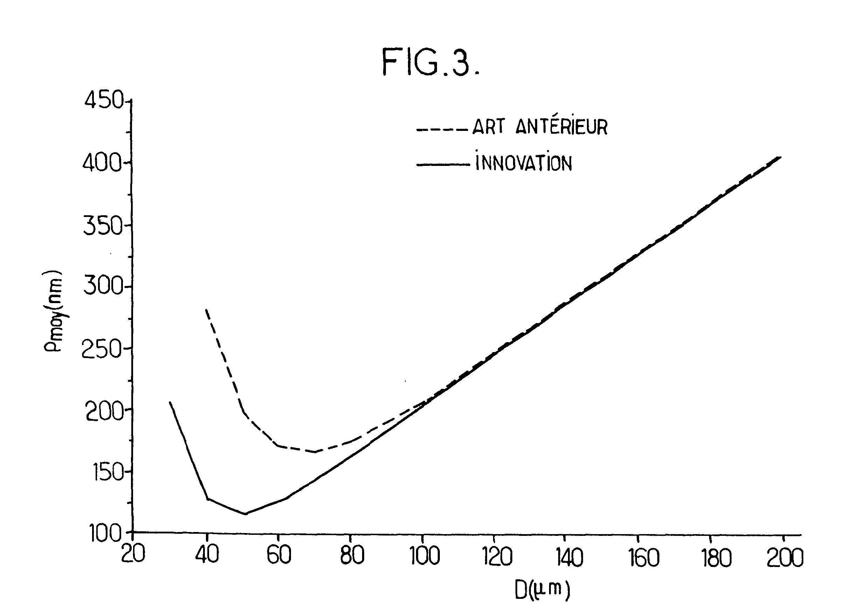

La figure 3 montre les variations de la rugosité quadratique moyenne de la lentille homogène qui est équivalente à l'élément optique 100, en fonction de la dimension cellulaire D. Les valeurs de la dimension D, exprimées en micromètres ($\mu$m), sont repérées en abscisse. Les valeurs de la rugosité quadratique moyenne $\rho_{moy}$ sont exprimées en nanomètres (nm) et repérées en ordonnée. Les deux courbes qui sont représentées sur le diagramme correspondent aux valeurs suivantes: R=10 mm, P = 1,0 dioptrie, $n_{eq}(R)-n_{eq}(O) = 0,25$ et un volume de goutte de 6 pl (picolitre), respectivement pour une profondeur de cellules qui est constante (courbe en traits interrompus correspondant à l'état de l'art avant la présente invention) et pour une profondeur variable (courbe continue correspondant à l'utilisation de l'invention). La valeur minimale de la rugosité quadratique qui est obtenue dans le cas de la profondeur variable des cellules, est d'environ 133 nm. Elle est obtenue pour une dimension D des cellules 1 d'environ 50 $\mu$m. A titre de comparaison, la valeur minimale de la rugosité quadratique sans varier la profondeur des cellules est d'environ 170 nm², obtenue pour la valeur 70 $\mu$m de la dimension D des cellules 1.

Il est entendu que les valeurs numériques qui ont été citées dans la description précédente de l'invention n'ont été données qu'à titre d'illustration. L'Homme du métier saura les adapter en fonction de l'application qui est envisagée pour l'élément optique comme défini dans la revendication 1. En outre, le mode de réalisation des cellules de l'élément optique, ainsi que la technique qui est utilisée pour leur remplissage, peuvent être modifiées.

## Revendications

1. Elément optique transparent (100), destiné à des applications ophtalmiques, permettant de voir distinctement un objet ou une scène à travers ledit élément optique et comprenant :

    - un substrat (10) avec une face de référence ($S_1$) ;
    - un réseau de parois (2) porté par la face de référence et formant un ensemble de cellules (1) séparées et juxtaposées parallèlement à ladite face de référence, les parois ayant des sommets respectifs ($T_2$) situés à une hauteur constante ($h_0$) mesurée à partir de la face de référence, et
    - un film (3) de fermeture des cellules disposé sur les sommets des parois parallèlement à la face de référence,

    chaque cellule (1) étant limitée latéralement par des faces de parois, et limitée entre le film de fermeture (3) et un fond de cellule ($B_1$) selon une direction (N) perpendiculaire à la face de référence ($S_1$), avec une profondeur (h) interne à la cellule mesurée entre les sommets ($T_2$) des parois et le fond de ladite cellule, selon ladite direction perpendiculaire, et contenant un milieu transparent,

    ledit élément optique étant **caractérisé en ce que** certaines au moins des cellules (1) ont des profondeurs (h) différentes, avec une portion complémentaire (4) d'un matériau solide transparent disposée entre le fond ($B_1$) de chacune des dites cellules et la face de référence ($S_1$),

    le matériau des portions complémentaires (4) et le milieu contenu dans l'une au moins des cellules (1) ayant des valeurs respectives différentes d'un indice de réfraction lumineuse,
et **en ce que** les profondeurs (h) des cellules (1) ont des variations adaptées pour conférer audit élément une puissance optique similaire à un effet de lentille optique.

2. Elément optique transparent selon la revendication 1, dans lequel les parois (2) sont constituées d'un matériau identique au matériau des portions complémentaires (4).

3. Elément optique transparent selon la revendication 1 ou 2, dans lequel le matériau des portions complémentaires (4) est une résine lithographique.

4. Elément optique transparent selon l'une quelconque des revendications 1 à 3, dans lequel plusieurs cellules (1) ayant des profondeurs (h) respectives différentes contiennent chacune un milieu identique.

5. Elément optique transparent selon la revendication 4, dans lequel ledit milieu identique est de l'air, un gaz inerte, ou un vide.

6. Elément optique transparent selon l'une quelconque des revendications 1 à 3, dans lequel les milieux contenus dans plusieurs cellules (1) ayant des profondeurs (h) respectives différentes, comprennent respectivement des mélanges d'au moins deux composantes de remplissage des cellules, avec des proportions variables entre certaines au moins des dites cellules.

7. Elément optique transparent selon la revendication 6, dans lequel les composantes de remplissage des cellules (1) ont des valeurs respectives différentes de l'indice de réfraction lumineuse.

8. Elément optique transparent selon l'une quelconque des revendications précédentes, dans lequel la profondeur (h) des cellules varie entre 5 $\mu$m et 30 $\mu$m, de préférence entre 15 $\mu$m et 25 $\mu$m.

9. Elément optique transparent selon l'une quelconque des revendications précédentes, dans lequel des centres de cellules (1) voisines sont séparés, parallèlement à la face de référence ($S_1$), d'une distance (D) comprise entre 10 $\mu$m et 200 $\mu$m, de préférence entre 40 $\mu$m et 75 $\mu$m.

10. Elément optique transparent selon l'une quelconque des revendications précédentes, dans lequel les milieux contenus dans lesdites cellules ont des variations adaptées pour conférer audit élément une puissance optique similaire à un effet de lentille optique.

11. Elément optique transparent selon l'une quelconque des revendications précédentes, dans lequel le substrat (10) comprend un film de base.

12. Composant optique transparent comprenant un composant optique de base (200) et un élément optique transparent (100) selon la revendication 11, ledit élément étant fixé sur une face ($S_{200}$) dudit composant de base.

13. Composant optique transparent selon la revendication 12, formant un verre de lunettes ophtalmiques adapté pour produire une correction visuelle pour un porteur dudit verre.

14. Composant optique transparent selon la revendication 13, dans lequel le composant optique de base (200) est lui-même un verre ophtalmique.

**Patentansprüche**

1. Transparentes optisches Element (100), das für ophthalmische Verwendungen bestimmt ist, das es ermöglicht, ein Objekt oder eine Szene deutlich durch das optische Element zu sehen, und enthält:

- ein Substrat (10) mit einer Bezugsseite ($S_1$) ;
- eine Gruppe von Wänden (2), die von der Bezugsseite getragen wird und eine Einheit von getrennten und parallel zur Bezugsseite nebeneinander angeordneten Zellen (1) formt, wobei die Wände Oberkanten ($T_2$) haben, die sich ausgehend von der Bezugsseite gemessen auf einer konstanten Höhe ($h_0$) befinden, und
- einen Film (3) zum Schließen der Zellen, der auf den Oberkanten der Wände parallel zur Bezugsseite angeordnet ist,

wobei jede Zelle (1) seitlich von Wandseiten begrenzt wird, und zwischen dem Schließfilm (3) und einem Zellenboden $(B_1)$ gemäß einer Richtung (N) lotrecht zur Bezugsseite $(S_1)$, mit einer Tiefe (h) innerhalb der Zelle gemessen zwischen den Oberkanten $(T_2)$ der Wände und dem Boden der Zelle gemäß der lotrechten Richtung, begrenzt wird und ein transparentes Medium enthält,

wobei das optische Element **dadurch gekennzeichnet ist, dass** zumindest bestimmte der Zellen (1) unterschiedliche Tiefen (h) haben, mit einem komplementären Teil eines transparenten festen Materials (4) zwischen dem Boden $(B_1)$ jeder der Zellen und der Bezugsseite $(S_1)$ angeordnet,

wobei das Material der komplementären Teile (4) und das in mindestens einer der Zellen (1) enthaltene Medium jeweils unterschiedliche Lichtbrechungsindexwerte haben,

und dass die Tiefen (h) der Zellen (1) Abweichungen haben, die geeignet sind, um den Element eine optische Leistung ähnlich einer Wirkung einer optischen Linse zu verleihen.

2. Transparentes optisches Element nach Anspruch 1, wobei die Wände (2) aus dem gleichen Material wie das Material der komplementären Teile (4) bestehen.

3. Transparentes optisches Element nach Anspruch 1 oder 2, wobei das Material der komplementären Teile (4) ein lithographisches Harz ist.

4. Transparentes optisches Element nach einem der Ansprüche 1 bis 3, wobei mehrere Zellen (1) mit unterschiedlichen Tiefen (h) je das gleiche Medium enthalten.

5. Transparentes optisches Element nach Anspruch 4, wobei das gleiche Medium Luft, ein Inertgas oder ein Vakuum ist.

6. Transparentes optisches Element nach einem der Ansprüche 1 bis 3, wobei die in mehreren Zellen (1) mit unterschiedlichen Tiefen (h) enthaltenen Medien Mischungen von mindestens zwei Füllkomponenten der Zellen enthalten, mit unterschiedlichen Anteilen zwischen zumindest bestimmten der Zellen.

7. Transparentes optisches Element nach Anspruch 6, wobei die Füllkomponenten der Zellen (1) unterschiedliche Werte des Lichtbrechungsindex haben.

8. Transparentes optisches Element nach einem der vorhergehenden Ansprüche, wobei die Tiefe (h) der Zellen zwischen 5 $\mu$m und 30 $\mu$m, vorzugsweise zwischen 15 $\mu$m und 25 $\mu$m, variiert.

9. Transparentes optisches Element nach einem der vorhergehenden Ansprüche, wobei Mitten benachbarter Zellen (1) parallel zur Bezugsseite $(S_1)$ um einen Abstand (D) zwischen 10 $\mu$m und 200 $\mu$m, vorzugsweise zwischen 40 $\mu$m und 75 $\mu$m, getrennt sind.

10. Transparentes optisches Element nach einem der vorhergehenden Ansprüche, wobei die in den Zellen enthaltenen Medien Abweichungen haben, die geeignet sind, um dem Element eine optische Leistung ähnlich einer Wirkung einer optischen Linse zu verleihen.

11. Transparentes optisches Element nach einem der vorhergehenden Ansprüche, wobei das Substrat (10) einen Basisfilm enthält.

12. Transparentes optisches Bauteil, das ein optisches Basisbauteil (200) und ein transparentes optisches Element (100) nach Anspruch 11 enthält, wobei das Element auf einer Seite $(S_{200})$ des Basisbauteils befestigt ist.

13. Transparentes optisches Bauteil nach Anspruch 12, das ein ophthalmisches Brillenglas formt, welches geeignet ist, um eine Sichtkorrektur für einen Träger des Glases zu erzeugen.

14. Transparentes optisches Bauteil nach Anspruch 13, wobei das optische Basisbauteil (200) selbst ein ophthalmisches Glas ist.

**Claims**

1. Transparent optical element (100), intended for ophthalmic applications, allowing an object or a scene to be seen distinctly through said optical element and comprising:

   - a substrate (10) having a reference face ($S_1$);
   - a network of walls (2) borne by the reference face and forming an array of cells (1) that are separated and juxtaposed parallel to said reference face, the walls having respective tops ($T_2$) located at a constant height ($h_0$) as measured from the reference face; and
   - a film (3) for closing the cells, said film being arranged on the tops of the walls parallel to the reference face,

   each cell (1) being limited laterally by wall faces, and being limited between the closing film (3) and a cell bottom ($B_1$), in a direction (N) perpendicular to the reference face ($S_1$), with a depth (h) internal to the cell, measured between the tops ($T_2$) of the walls and the bottom of said cell in said perpendicular direction, and containing a transparent medium,
   said optical element being **characterized in that** certain at least of the cells (1) have different depths (h), a complementary portion (4) of a transparent solid material being arranged between the bottom ($B_1$) of each of said cells and the reference face ($S_1$),
   the material of the complementary portions (4) and the medium contained in at least one of the cells (1) having different respective values of a luminous refractive index,
   and **in that** the depths (h) of the cells (1) have variations suitable for conferring on said elements an optical power similar to an optical lens effect.

2. Transparent optical element according to Claim 1, in which the walls (2) are made of an identical material to the material of the complementary portions (4).

3. Transparent optical element according to Claim 1 or 2, in which the material of the complementary portions (4) is a lithography resist.

4. Transparent optical element according to any one of Claims 1 to 3, in which a plurality of cells (1) having different respective depths (h) each contain an identical medium.

5. Transparent optical element according to Claim 4, in which said identical medium is air, an inert gas or a vacuum.

6. Transparent optical element according to any one of Claims 1 to 3, in which the media contained in a plurality of cells (1) having different respective depths (h), respectively comprise mixtures of at least two components for filling the cells, in proportions that differ between certain at least of said cells.

7. Transparent optical element according to Claim 6, in which the components for filling the cells (1) have different respective values of luminous refractive index.

8. Transparent optical element according to any one of the preceding claims, in which the depth (h) of the cells varies between 5 $\mu$m and 30 $\mu$m and preferably between 15 $\mu$m and 25 $\mu$m.

9. Transparent optical element according to any one of the preceding claims, in which the centres of neighbouring cells (1) are separated, parallel to the reference face ($S_1$), by a distance (D) comprised between 10 $\mu$m and 200 $\mu$m and preferably between 40 $\mu$m and 75 $\mu$m.

10. Transparent optical element according to any one of the preceding claims, in which the media contained in said cells have variations suitable for conferring on said element an optical power similar to an optical lens effect.

11. Transparent optical element according to any one of the preceding claims, in which the substrate (10) comprises a base film.

12. Transparent optical component comprising a base optical component (200) and a transparent optical element (100) according to Claim 11, said element being fastened to a face ($S_{200}$) of said base component.

13. Transparent optical component according to Claim 12, forming an ophthalmic spectacle lens suitable for producing a visual correction for a wearer of said lens.

14. Transparent optical component according to Claim 13, in which the base optical component (200) is itself an ophthalmic lens.

FIG.1.

FIG.2a.

FIG.2b.

FIG.3.

EP 2 366 124 B1

**EP 2 366 124 B1**

## RÉFÉRENCES CITÉES DANS LA DESCRIPTION

**Documents brevets cités dans la description**

- WO 2008099117 A